# EUROPÄISCHE PATENTSCHRIFT

(11) **EP 0 854 815 B1**
(45) Veröffentlichungstag und Bekanntmachung des Hinweises auf die Patenterteilung: **29.12.1999**
(21) Anmeldenummer: 96934668.3
(22) Anmeldetag: 12.10.1996
(51) Int. Cl.: B62D 1/18

(54) **LENKSÄULE EINES KRAFTFAHRZEUGES**
STEERING COLUMN OF A MOTOR VEHICLE
COLONNE DE DIRECTION POUR AUTOMOBILE

(30) Priorität: 14.10.1995 DE 19538303
(43) Veröffentlichungstag der Anmeldung: 29.07.1998
(73) Patentinhaber: ZF FRIEDRICHSHAFEN Aktiengesellschaft, 88038 Friedrichshafen (DE)
(72) Erfinder: BUDAKER, Martin, D-73540 Heubach (DE); HÄGELE, Gerhard, D-73453 Hohenstadt (DE)
(86) Internationale Anmeldenummer: EP9604455
(87) Internationale Veröffentlichungsnummer: WO9714600

(56) Entgegenhaltungen:
- EP-A- 0 381 188
- EP-A- 0 417 730
- GB-A- 2 060 137

## Beschreibung

Die Erfindung betrifft eine verstellbare Lenksäule für Kraftfahrzeuge, deren Lenkspindel teleskopartig ineinandergeschobene Teile aufweist, wie zum Beispiel ein Lenkspindelrohr und ein Lenkspindelschiebestück, die zum Zweck einer spielfreien Mitnahme in Umfangsrichtung gegeneinander verspannt sind.

Aus der DE-A1-40 34 819 ist eine Lenksäule für Kraftfahrzeuge mit einem in axialer Richtung betätigbaren, integrierten, hydraulischen Zylinder bekannt. Die hydraulische Höhenverstellung durch die Druckräume erfolgt mit Hilfe von Magnetventilen eines Druckbegrenzungsventils und eines Rückschlagventils. Als Druckmittelquelle kann eine schon bereits für das hydraulische Bordnetz vorhandene Pumpe dienen. Eine derartige Lenkanlage umfaßt verhältnismäßig viele Zusatzteile und beansprucht einen großen Bauraum.

Beim Lösen der Klemmvorrichtung einer verstellbaren Lenksäule fällt das Lenkrad durch das Eigengewicht des Lenkrades und der verstellbaren Teile der Lenksäule auf die unterste Versteilposition. Das Gewicht des Lenkrades und der oberen Lenksäulenteile kann im Extremfall bis zu 30 kg betragen. Der Fahrer muß daher beim Verstellen der Lenkradposition diese hohe Gewichtskraft aufbringen, um das Lenkrad in die gewünschte Lage zu bringen. Dies ist nur unter hoher Kraftanstrengung möglich.

Um die Gewichtskraft aufzunehmen, wird daher eine Druckfeder zwischen die verschiebbaren Teile der Teleskopwelle eingebaut. Die Teleskopwelle ist das Verbindungsstück zwischen Lenkrad und oberer Lenksäule. Durch die hohen Kräfte und den relativ geringen Bauraum hat die Druckfeder eine hohe Federkonstante und somit über den Verstellbereich einen hohen Kraftanstieg.

Die Gewichtskraft kann somit nicht über den gesamten Hubbereich ausgeglichen werden. Durch den eingeschränkten Bauraum läßt sich die Druckfeder nur am Außendurchmesser der Teleskopwelle unterbringen mit dem Nachteil einer erheblichen Vergrößerung des Außendurchmessers. Die Hubbegrenzung, d. h. der Endanschlag für die Druckfeder, muß durch die Teleskopwelle geschehen. Bei den hohen Federkräften kann dies zur Beschädigung an der Kugelführung der Teleskopwelle führen.

Eine andere Lenksäule für Kraftfahrzeuge ist bekannt aus der EP-A1-0 417 730, die die im Oberbegriff des Anspruchs 1 definierten Merkmale offenbart. Diese Lenksäule enthält eine Gasfeder mit einem Schließventil, das durch einen Axialdruck in eine offene Position verstellt werden kann. Damit kann die Gasfeder in unterschiedliche Stellungen verstellt werden.

Der Erfindung liegt die Aufgabe zugrunde, den Fahrer von der hohen Gewichtskraft beim Verstellen der Lenkradposition zu entlasten. Diese Forderung soll keinen zusätzlichen Bauraum beanspruchen.

Diese Aufgabe ist nach der Erfindung durch die im Anspruch 1 definierten Merkmale gelöst. Die Federkonstante einer Gasdruckfeder kann so ausgelegt werden, daß die Kraftänderung über den Hubbereich gering ist, d. h. die Kraft, die der Gewichtskraft entgegenwirkt, ändert sich über den genannten Verstellbereich der Lenksäule nur unwesentlich. Bei gelöster Klemmvorrichtung der Lenksäule "schwebt" das Lenkrad in der jeweiligen Position. Im Gegensatz zu bekannten Lenkungen wird für die Gasdruckfeder kein zusätzlicher Bauraum benötigt. Die Gasdruckfeder hat eine eigene Hubbegrenzung, so daß keine zerstörenden Kräfte auf die Teleskopwelle einwirken.

In weiterer Ausgestaltung der Erfindung weist das Lenkspindelschiebestück für die Aufnahme der Gasdruckfeder eine Stufenbohrung auf, die durch ein Verschlußelement abgeschlossen ist. Die Kolbenstange erstreckt sich durch den im Durchmesser verringerten Bohrungsteil und stützt sich auf einer mit dem Lenkspindelrohr verbundenen Gelenkgabel ab.

Es ist zweckmäßig, zwischen dem Lenkspindelrohr und dem Lenkspindelschiebestück eine aus Längsnuten und Kugeln bestehende Kugelführung vorzusehen, die Relativbewegungen zwischen Fahrerkabine und Fahrgestell ausgleichen kann.

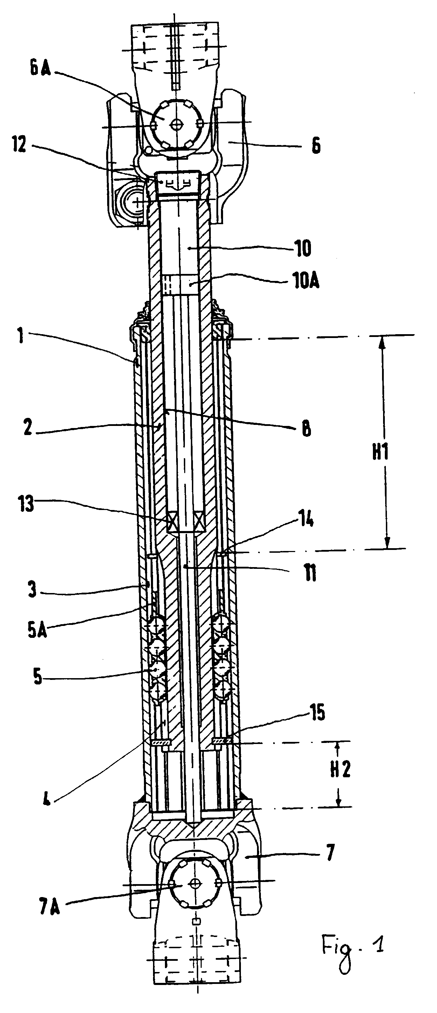

Anhand der Zeichnung ist ein Ausführungsbeispiel der Erfindung näher erläutert. Die Zeichnung zeigt einen Schnitt durch eine Teleskopwelle, die zwischen einem Lenkrad und dem Lenkgetriebe angeordnet ist.

Ein Lenkspindelrohr 1 und ein Lenkspindelschiebestück 2 einer Teleskopwelle tragen am Innen- bzw. Außendurchmesser Längsnuten 3 und 4. Zwischen diesen Längsnuten 3 und 4 sind zum reibungsarmen Verschieben Kugeln 5 eingesetzt. Das obere Ende des Lenkspindelschiebestücks 2 trägt eine Gelenkgabel 6 eines Kreuzgelenks 6A und das untere Ende des Lenkspindelrohres 1 eine Gelenkgabel 7 eines Kreuzgelenks 7A. Das Lenkspindelschiebestück 2 weist eine Stufenbohrung 8 auf, in der eine Gasdruckfeder 10, bestehend aus einem Kolben 10A mit einer Kolbenstange 11, integriert ist. Druckräume oberhalb und unterhalb des Kolbens 10A sind in an sich bekannter Weise mit Gas gefüllt. Die Stufenbohrung 8 ist am oberen Ende durch ein Verschlußelement 12 abgeschlossen. Das Ende der Gasdruckfeder 10 stützt sich an diesem Verschlußelement 12 gegen das Lenkspindelschiebestück 2 ab. Am unteren Ende befindet sich eine Dichtung 13. Die Kolbenstange 11 stützt sich auf der Gelenkgabel 7 ab, so daß Lenkspindelrohr 1 und Lenkspindelschiebestück 2 durch die Gasdruckfeder 10 auseinandergedrückt werden. Der Kolben 10A ist in Einbaulage gezeichnet. Nach oben steht ein Hub H1 und nach unten ein Hub H2 zur Verfügung. Die Hübe H1 und H2 geben den möglichen Verstellweg an. Die Kugeln 5, die in einem Käfig 5A geführt sind, erlauben bis zu einem Anschlagring 14 nach oben und bis zu einem Anschlagring 15 nach unten rollende Reibung. Darüber hinaus findet Gleitreibung statt. Innerhalb der rollenden Reibung lassen sich die Relativbewegungen zwischen Fahrerkabine und Fahrgestell ausgleichen.

### Bezugszeichen

- 1: Lenkspindelrohr
- 2: Lenkspindelschiebestück
- 3: Längsnuten innen
- 4: Längsnuten außen
- 5: Kugeln
- 5A: Käfig
- 6: Gelenkgabel
- 6A: Kreuzgelenk
- 7: Gelenkgabel
- 7A: Kreuzgelenk
- 8: Stufenbohrung
- 9: -
- 10: Gasdruckfeder
- 10A: Kolben
- 11: Kolbenstange
- 12: Verschlußelement
- 13: Dichtung
- 14: Anschlagring
- 15: Anschlagring
- H1: Hubweg nach oben
- H2: Hubweg nach unten

## Patentansprüche

1. Axial verstellbare Lenksäule für Kraftfahrzeuge, deren Lenkspindel teleskopartig ineinandergeschobene Teile aufweist, zum Beispiel ein Lenkspindelrohr (1) und ein Lenkspindelschiebestück (2), die zur Erzielung einer spielfreien Mitnahme in Umfangsrichtung gegeneinander verspannt sind, und wobei im oberen Teil des Lenkspindelschiebestükkes (2) eine Gasdruckfeder (10) eingebaut ist, die sich über eine Kolbenstange (11) gegen ein mit dem Lenkspindelrohr (1) verbundenes Bauteil abstützt, dadurch **gekennzeichnet,** daß die Gasdruckfeder (10) ausschließlich dazu ausgebildet ist, das Gewicht eines mit dem Lenkspindelschiebestück (2) verbundenen Lenkrades und von mit diesem verbundenen, verschiebbaren Teilen der Lenksäule auszugleichen.

2. Axial verstellbare Lenksäule nach Anspruch 1, dadurch **gekennzeichnet,** daß das Lenkspindelschiebestück (2) für die Aufnahme der Gasdruckfeder (10) eine Stufenbohrung (8) aufweist, die durch ein Verschlußelement (12) abgeschlossen ist und die Kolbenstange (11) sich durch den im Durchmesser verringerten Bohrungsteil der Stufenbohrung (8) erstreckt und auf einer mit dem Lenkspindelrohr (1) verbundenen Gelenkgabel (7) abgestützt ist.

3. Axial verstellbare Lenksäule nach Anspruch 1, dadurch **gekennzeichnet,** daß zwischen Lenkspindelrohr (1) und Lenkspindelschiebestück (2) eine aus Längsnuten (3 bzw. 4) und Kugeln (5) bestehende Kugelführung vorgesehen ist, die Relativbewegungen zwischen der Fahrerkabine und dem Fahrgestell ausgleichen kann.

## Claims

1. Axially adjustable steering column for motor vehicles, the steering spindle of which comprises parts inserted telescopically one into the other, e.g. a steering spindle tube (1) and a steering spindle sliding piece (2), which for achieving a play-free motional coupling are braced against one another in peripheral direction, and wherein installed in the upper part of the steering spindle sliding piece (2) is a pneumatic pressure spring (10), which is supported via a piston rod (11) against a structural part connected to the steering spindle tube (1), characterized in that the pneumatic pressure spring (10) is designed exclusively for the purpose of compensating the weight of a steering wheel connected to the steering spindle sliding piece (2) and of displaceable parts of the steering column which are connected to said steering wheel.

2. Axially adjustable steering column according to claim 1, characterized in that the steering spindle sliding piece (2) for receiving the pneumatic pressure spring (10) has a stepped bore (8), which is closed off by a closure element (12), and the piston rod (11) extends through the reduced-diameter bore part of the stepped bore (8) and is supported against an articulated fork (7) connected to the steering spindle tube (1).

3. Axially adjustable steering column according to claim 1, characterized in that provided between steering spindle tube (1) and steering spindle sliding piece (2) is a ball guide, which comprises longitudinal grooves (3 and 4) and balls (5) and which may compensate relative movements between the driver's cab and the chassis.

## Revendications

1. Colonne de direction axialement déplaçable pour automobiles, dont l'arbre de direction comporte des éléments télescopiques, par exemple un tube d'arbre de direction (1) et un élément d'arbre de direction coulissant (2) qui sont mutuellement entretoisés pour assurer un entraînement sans jeu dans le sens circonférentiel, et dans laquelle, dans la partie supérieure de l'élément d'arbre de direction coulissant (2), un ressort sous pression de gaz (10) est inséré, lequel s'appuie, par l'intermédiaire d'une tige de piston (11), contre un élément de construction relié au tube d'arbre de direction (1), **caractérisée** en ce que le ressort sous pression de gaz (10) est conçu exclusivement pour compenser le poids d'un volant de direction relié à l'élément d'arbre de direction coulissant (2) et d'éléments coulissants de la colonne de direction reliés à celui-ci.

2. Colonne de direction axialement déplaçable selon la revendication 1, **caractérisée** en ce que l'élément d'arbre de direction coulissant (2) comporte un alésage à gradins (8) pour recevoir le ressort sous pression de gaz (10), cet alésage (8) étant fermé par un élément de fermeture (12), la tige de piston (11) s'étendant à travers la partie de l'alésage (8) à diamètre réduit et étant supportée par une fourche articulée (7) reliée au tube d'arbre de direction (1).

3. Colonne de direction axialement déplaçable selon la revendication 1, **caractérisée** en ce qu'entre le tube d'arbre de direction (1) et l'élément d'arbre de direction coulissant (2) est prévu un guidage de billes composé de rainures longitudinales (3, respectivement 4) et de billes (5), qui peut compenser les mouvements relatifs entre la cabine du conducteur et le châssis.
